(19) Europäisches Patentamt

European Patent Office

Office européen des brevets

(11) Numéro de publication: **0 413 629 A1**

# (12) DEMANDE DE BREVET EUROPEEN

(21) Numéro de dépôt: 90402287.8

(22) Date de dépôt: 13.08.90

(51) Int. Cl.⁵: **A22C 21/00**

(30) Priorité: 17.08.89 FR 8910975

(43) Date de publication de la demande:
20.02.91 Bulletin 91/08

(84) Etats contractants désignés:
AT BE CH DE DK ES FR GB GR IT LI LU NL SE

(71) Demandeur: **ARRIVE S.A.**
**B.P. no. 1**
**F-85250 Saint-Fulgent(FR)**

Demandeur: **UNIGRAINS-UNION FINANCIERE**
**POUR LE DEVELOPPEMENT DE L'ECONOMIE**
**CEREALIERE**
**8, Avenue Président Wilson**
**F-75116 Paris(FR)**

(72) Inventeur: **Villemin, Daniel**
**19, rue Condorcet**
**F-94439 Chennevières-Sur-Marne(FR)**
Inventeur: **Romand, Paul**
**31, avenue de Verdun**
**F-26000 Valence(FR)**
Inventeur: **Plusa, Janusz**
**148, rue de Verdun**
**F-94500 Champigny-sur-Marne(FR)**

(74) Mandataire: **Casalonga, Axel et al**
**BUREAU D.A. CASALONGA - JOSSE 8,**
**avenue Percier**
**F-75008 Paris(FR)**

(54) **Procédé et installation pour la conformation des pattes et le bridage de volailles.**

(57) L'installation comprend au moins un poste de conformation (7) pouvant être desservi par un transporteur (3) auquel les volailles (4) à conformer sont suspendues par des balancelles (5), ledit poste comprenant:

- des moyens de préhension et de transfert (10) pour saisir les extrémités des pattes de chaque volaille, les décrocher de la balancelle (5) et les amener au poste de conformetion;

-des moyens (11) pour immobiliser en hauteur les extrémités des pattes de la volaille après transfert au poste de conformation;

-des moyens (12) pour soulever le corps de la volaille de manière à l'amener à un point de référence, en pliant les pattes;

- une pince de maintien (40) pour saisir le corps de la volaille à sa partie dorsale et le bloquer en position;

-une pince de contention (41) pour enserrer la volaille à l'extérieur des pattes et maintenir les pattes en position repliée contre corps, et

- des moyens d'actionnement (21, 24, 36, 59) pour manoeuvrer les moyens de préhension et de transfert, les moyens d'immobilisation, les moyens de soulèvement et les pinces.

FIG. 1

# PROCEDE ET INSTALLATION POUR LA CONFORMATION DES PATTES ET LE BRIDAGE DE VOLAILLES.

La présente invention se rapporte à un procédé et à une installation pour la conformation des pattes et le bridage de volailles, notamment de poulets, après abattage, plumage et éviscération et après conformation des ailes, consistant à plier les pattes contre le corps et à les fier en position à l'aide d'un lien, par exemple un bracelet élastique.

Pour la vente de volailles prêtes à cuire, rôtir ou griller, on présente généralement les volailles conformées et bridées. La conformation comprend la conformation des ailes, c'est-à-dire la torsion et le pliage des ailes et leur blocage sur le dos, ainsi que le conformation des pattes, c'est-à-dire le pliage des pattes et éventuellement l'introduction des moignons métatarsiens dans l'ouverture d'éviscération.

Jusqu'à présent, ces opérations sont effectuées manuellement. Il a déjà été proposé, par exemple par les demandes de brevets français n° 2 485 336 et 2 522 475, d'automatiser la conformation des pattes et le bridage de volailles, mais la conformation sur ces dispositifs implique que les volailles à conformer soient installées ou déposées sur les dispositifs en question, ce qui nécessite, sur une chaîne d'abattage et d'éviscération sur laquelle toutes les opérations s'effectuent sur les volailles suspendues par les pattes à un transporteur, le transfert des volailles de ce transporteur sur le dispositif de conformation, avec intervention manuelle. De plus, ni la conformation proprement dite ni le bridage (pose du lien de bridage) ne sont entièrement automatisés sur les installations suivant les documents précités.

La présente invention vise à automatiser la conformation des pattes et le bridage de volailles et a pour objet un procédé et une installation permettant sans aucune intervention manuelle, de conformer les pattes et de brider les volailles directement à la suite de la conformation des ailes qui elle-même suit les opérations d'abattage et d'éviscération et éventuellement le ressuage continu.

Suivant le procédé conforme à l'invention, on transfère chaque volaille, en la saisissant par les articulations métatarsiennes, de la balancelle par laquelle elle est suspendue à un transporteur, sur un dispositif de conformation. On immobilise ensuite les extrémités des pattes de la volaille et on soulève son corps entre les pattes en pliant ces dernières, pour amener le corps à un point de référence. On bloque la volaille dans cette position par une pince de maintien saisissant le corps de la volaille à sa partie dorsale et par une pince de contention enserrant la volaille à l'extérieur des pattes pour maintenir les pattes en position repliée contre le corps, tout en laissant dégagées la partie ventrale, la partie avant et la partie arrière de la volaille. La volaille étant ainsi bloquée en position, on libère les articulations métatarsiennes et on pose sur la volaille un lien de bridage constitué par une boucle double, la première boucle partant de la base du dos de la volaille en enserrant les extrémités des pattes et la seconde boucle passant par les flancs, en venant se louer dans l'intervalle entre les cuisses et les flancs, et enserrant les ailes et le thorax, avant d'ouvrir les deux pinces pour libérer la volaille entièrement conformée et bridée.

Dans le cas de volailles dont les pattes sont encore munies d'un moignon métatarsien, on plie et introduit les moignons métatarsiens dans l'ouverture d'éviscération de la volaille maintenue en position par les pinces simultanément au pliage des pattes.

Dans le cas de volailles dont les pattes sont sans moignon métatarsien, on plie les pattes contre le corps en amenant les articulations métatarsiennes contre l'ouverture d'éviscération.

De préférence, le bridage s'effectue en utilisant un lien de bridage constitué par un anneau ou bracelet élastique croisé. Suivant l'invention, on présente sensiblement dans un plan horizontal un anneau élastique croisé en face de la partie arrière de la volaille conformée maintenue par les pinces. On engage l'une des boucles de l'anneau croisé sur le croupion et les extrémités des pattes. On tire l'autre boucle sur le côté ventral jusqu'au côté avant de la volaille, en passant sur les ailes, et on la libère.

L'installation suivant l'invention de conformation des pattes de volailles comprend, au moins un poste de conformation pouvant être desservi par un transporteur auquel les volailles à conformer sont suspendues par des balancelles, ce poste comprenant

- des moyens de préhension et de transfert pour saisir les extrémités des pattes de chaque volaille, les décrocher de la balancelle et les amener au poste de conformation;

- des moyens pour immobiliser en hauteur les extrémités des pattes de la volaille après transfert au poste de conformation;

- des moyens pour soulever le corps de la volaille de manière à l'amener à un point de référence, en pliant les pattes;

- une pince de maintien pour saisir le corps de la volaille à sa partie dorsale et le bloquer en position;

- une pince de contention pour enserrer la volaille à l'extérieur des pattes et maintenir les pattes en position repliée contre le corps, et

- des moyens d'actionnement pour manoeuvrer les moyens de préhension et de transfert, les moyens d'immobilisation, les moyens de soulèvement et les pinces.

Pour la conformation de volailles dont les pattes sont munies d'un moignon métatarsien, l'installation conforme à l'invention comprend, en outre, sur le ou chaque poste de conformation, des moyens de pliage et d'introduction des moignons métatarsiens des pattes dans l'ouverture d'éviscération du corps de la volaille, ainsi que des moyens d'actionnement pour manoeuvrer lesdits moyens de pliage et d'introduction.

Dans ce même cas, de préférence, chaque poste de conformation comprend, en outre, des moyens de centrage et de guidage pour centrer la partie haute du corps de la volaille, en dégageant l'ouverture d'éviscération de cette dernière et pour guider les moignons métatarsiens vers ladite ouverture, et des moyens d'enfoncement des moignons dans l'ouverture d'éviscération ainsi dégagée.

Les moyens de préhension et de transfert peuvent comprendre deux bras opposés montés sur un support commun et portant chacun à leur extrémité libre une fourche à deux doigts tournée vers la fourche du bras opposé, les deux bras étant mobiles en opposition en va-et-vient dans le sens d'un rapprochement et d'un écartement réciproque de leurs fourches et étant mobiles conjointement en va-et-vient entre une position de préhension des pattes d'une volaille accrochée à une balancelle et une position de libération desdites pattes, ainsi que des moyens d'actionnement pour commander lesdits mouvements de manière à rapprocher les bras en position de préhension pour saisir les pattes d'une volaille, à amener les bras rapprochés de la position de préhension à la position de libération, à écarter les bras dans cette position pour libérer les pattes et ramener ensuite les bras écartés en position de préhension pour les rapprocher ici en vue de saisir les pattes d'une volaille suivante.

Les moyens d'immobilisation en hauteur des extrémités des pattes peuvent avantageusement comprendre un poussoir mobile verticalement en va-et-vient.

Les moyens de soulèvement du corps de la volaille comprennent un organe mobile de bas en haut, conçu de manière à agir sur la face avant du thorax de la volaille avec effet de centrage et à appliquer le corps de la volaille, au moins à la fin du mouvement de soulèvement, contre un appui dorsal fixe, mais préréglable en position avant/arrière en fonction de la taille des volailles.

La pince de maintien et la pince de contention comprennent avantageusement deux branches de pince de maintien articulées sur un support commun et commandées directement dans leurs mouvements d'ouverture et de fermeture, et deux branches de pince de contention montées avec du jeu angulaire sur les branches de pince de maintien et sollicitées par des ressorts dans le sens de fermeture.

Les moyens de pliage et d'introduction des moignons métatarsiens comprennent ledit poussoir et un organe d'accompagnement dudit poussoir pour, dégager les extrémités des pattes du poussoir en introduisant les moignons métatarsiens dans l'ouverture d'éviscération lors de la descente du poussoir.

Les moyens de centrage et de guidage et les moyens d'enfoncement comprennent de préférence une lame sensiblement verticale effilée à son extrémité inférieure et mobile sensiblement verticalement en va-et-vient entre une position haute dans laquelle sa pointe est située au-dessus du corps de la volaille et une position basse dans laquelle sa pointe est engagée dans la cavité abdominale du corps de la volaille, cette lame portant, sur sa face tournée vers les pattes, des butées pour rapprocher les moignons métatarsiens et les entraîner dans ladite cavité.

De préférence, plusieurs postes de conformation sont montés sur un carrousel et lesdits moyens d'actionnement sont commandés par des cames fixes.

Pour le bridage de la volaille conformée à l'aide d'un anneau élastique croisé, l'installation conforme à l'invention comprend des moyens de maintien pour présenter un anneau élastique croisé à l'état légèrement tendu dans un plan, et des moyens de déplacement desdits moyens de maintien par rapport à la volaille conformée de manière à poser et tendre l'anneau élastique croisé sur la volaille.

Lesdits moyens de maintien de l'anneau élastique comprennent avantageusement deux groupes de pions maintenant les deux boucles de l'anneau croisé et lesdits moyens de déplacement comprennent avantageusement deux moyens de déplacement faisant effectuer des mouvements différents auxdits deux groupes de pions.

Le premier moyen de déplacement et le second moyen de déplacement sont avantageusement conformés de manière à imprimer au premier groupe de pions de maintien et au second groupe de pions de maintien un déplacement simultané de faible amplitude pour poser sur la partie arrière de la volaille la boucle de l'anneau maintenue par le premier groupe de pions et imprimer ensuite uniquement au second groupe de pions, avec libération simultanée de l'anneau par le premier groupe de pions, un second déplacement de grande amplitude pour tendre l'anneau sur la partie ventrale de la volaille et poser la seconde boucle à l'état tendu sur la partie avant de la volaille.

De préférence, les pions du premier groupe de pions sont montés sur un premier chariot et les pions du second groupe de pions sont montés sur un second chariot guidé par une glissière, le second chariot étant entraîné par un moyen d'entraînement le long de ladite glissière et le premier chariot comportant des moyens pour son guidage par le second chariot et son déplacement sur la première partie du trajet de déplacement du second chariot sous l'action du déplacement de ce dernier.

En vue de l'automatisation du bridage, l'installation conforme à l'invention comprend en outre de préférence des moyens de transfert d'un anneau élastique croisé auxdits pions de maintien depuis des moyens d'approvisionnement en anneaux élastiques croisés.

Lesdits moyens de transfert peuvent de préférence comprendre une paire de bras pivotants portant des pions, des moyens pour l'écartement et le rapprochement desdits bras, et des moyens d'entraînement pour déplacer la paire de bras entre les moyens d'approvisionnement et les pions de maintien.

Suivant un mode de réalisation préféré, les moyens de transfert comprennent deux paires de bras, portant des pions, les bras des deux paires étant actionnés par des mêmes moyens d'écartement et de rapprochement de manière que les bras d'une paire s'écartent lorsque les bras de l'autre paire se rapprochent, et inversement.

De préférence, les moyens de transfert comprennent, en outre, des moyens mobiles en va-et-vient suivant la longueur de l'anneau élastique croisé, simultanément avec l'écartement et le rapprochement desdits bras, ces moyens portant également des pions pour augmenter la longueur d'une boucle lors de l'écartement des bras et la réduire lors du rapprochement des bras.

De préférence, lesdits moyens de transfert sont montés pivotants de 180° de manière à présenter en alternance simultanément une première paire de bras en regard des moyens d'approvisionnement fixes et les écarter pour reprendre un anneau élastique croisé desdits moyens d'approvisionnement, et une seconde paire de bras portant un anneau élastique croisé en regard desdits moyens de maintien et les rapprocher pour transférer un anneau élastique croisé auxdits moyens de maintien.

Lesdits moyens d'approvisionnement peuvent par exemple comprendre deux éléments de support parallèles espacés comportant un filetage, et des moyens d'entraînement simultané en rotation pas à pas desdits deux éléments de support.

De préférence, lesdits deux éléments de support comportent un filet à pas progressif.

Dans le cas où les postes de conformation sont montés sur un carrousel, il est avantageux que plusieurs moyens de maintien soient montés sur un transporteur conçu de manière à les déplacer entre un unique moyen de transfert et ledit carrousel.

En se référant aux dessins schématiques annexés, on va décrire ci-après plus en détail un mode de réalisation illustratif et non limitatif de l'invention; sur les dessins :

la figure 1 est une vue de côté d'un poste de conformation monté sur un carrousel, dans la position correspondant au début du transfert d'une volaille de sa balancelle de transport au poste de conformation;

la figure 2 est une vue analogue à celle de la figure 1 en cours de conformation;

la figure 3 est une vue analogue à celle des figures 1 et 2, à la fin de la conformation;

les figures 4a et 4b sont des coupes suivant IV-IV de la figure 1 montrant les bras de préhension et de transfert et leur commande;

la figure 5 est une vue en élévation, à plus grande échelle, de la lame de guidage et d'introduction des moignons métatarsiens, prise depuis le côté tourné vers les pattes (depuis la gauche sur les figures 1 à 3); les figures 6a et 6b sont des vues de dessus des pinces de maintien et de contention, en position ouverte et en position fermée;

la figure 7 est une vue de côté d'une volaille amenée au poste de bridage en étant maintenue par les pinces de maintien et de contention;

la figure 8 est une coupe suivant VIII-VIII de la figure 7 montrant les moyens de maintien de l'anneau élastique croisé, au début du cycle de bridage;

la figure 9 est une vue de côté d'une volaille maintenue par les pinces, montrant les différentes positions des moyens de maintien de l'anneau élastique au cours de sa pose sur le corps de la volaille;

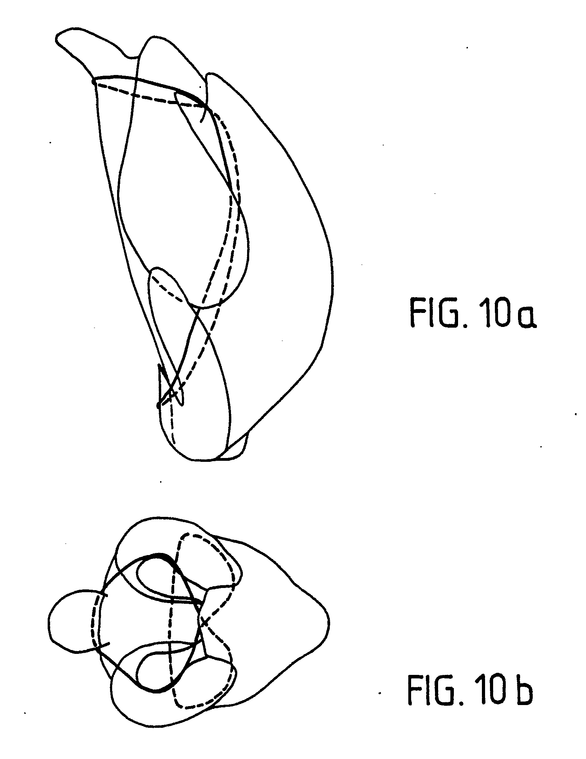

les figures 10a et 10b représentent une volaille bridée en vue latérale et en vue arrière;

la figure 11 est une vue de côté de l'ensemble du dispositif de bridage comprenant les moyens de maintien et de pose d'un anneau élastique, un moyen de transfert d'anneaux élastiques et un dispositif d'approvisionnement en anneaux élastiques croisés;

les figures 12 et 13 sont des vues de dessus du moyen de transfert des anneaux élastiques croisés, dans deux positions différentes;

la figure 14 est une vue de dessus schématique de l'ensemble d'une installation de conformation et de bridage de volaille.

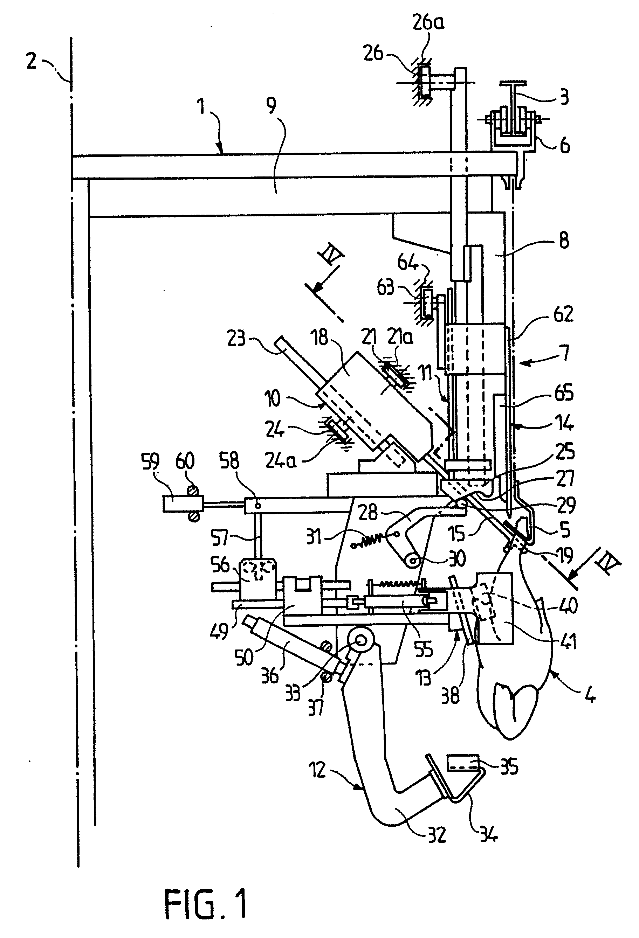

Selon les figures 1 à 3, un carrousel 1 dont l'axe de rotation vertical est référencé 2 est raccordé tangentiellement au trajet d'un transporteur aérien 3 véhiculant les volailles à conformer. Chaque volaille 4 à conformer est suspendue par ses pattes à une balancelle elle-même suspendue à un chariot 6 roulant sur le transporteur 3.

A l'endroit du carrousel 1, le transporteur 3 avec les volailles 4 suspendues parcourt un trajet en arc de cercle pour suivre le carrousel et permettre le transfert des volailles du transporteur 3 sur le carrousel.

Le carrousel 1 porte plusieurs unités de conformation 7 dont une seule est représentée, les unités de conformation 7 étant réparties uniformément sur le pourtour du carrousel avec un pas correspondant au pas des chariots 6 sur le transporteur 3.

Chaque unité de conformation 7 comprend un support 8 s'étendant vers le bas à partir du plateau supérieur 9 rotatif du carrousel 1.

Sur le support 8 sont montés cinq moyens mobiles, à savoir des moyens 10 de préhension et de transfert des volailles, des moyens il d'immobilisation en hauteur des pattes des volailles et de pliage des moignons métatarsiens des pattes, des moyens 12 de soulèvement des corps des volailles, des moyens 13 de maintien et de contention des volailles et des moyens 14 de centrage du corps des volailles et de guidage des pattes en vue de leur introduction.

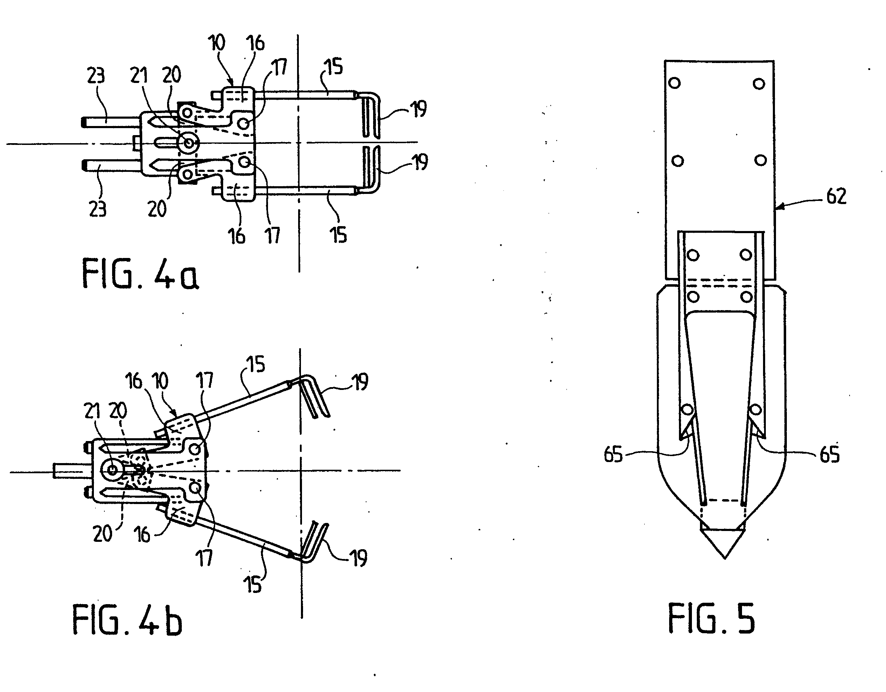

Les moyens 10 de préhension et de transfert comprennent, comme le montrent surtout les figures 4a et 4b, deux bras opposés 15 ayant chacun une extrémité solidaire d'un levier coudé 16 articulé par un axe 17 sur une monture 18. A son extrémité opposée libre, chaque bras porte une fourche à deux doigts 19 orientée perpendiculairement au bras 15 de manière que les deux fourches 19 soient tournées l'une vers l'autre. Les autres extrémités des leviers coudés 16 sont articulées par l'intermédiaire de biellettes 20 sur l'axe d'un galet suiveur de came 21 qui, comme le montre la figure 1, coopère avec une came fixe 21a.

La monture 18 est montée mobile en translation sur deux tiges de guidage 23 disposées radialement par rapport au carrousel 1 en étant inclinées de bas en haut vers l'axe 2 du carrousel. Le mouvement de coulissement en va-et-vient de la monture 18 sur les tiges 23 est commandé par un galet 24 coopérant avec une came fixe 24e.

Le galet 21 en contact avec la came 21e commande, comme le montrent les figures 4e et 4b, le mouvement de pivotement des deux bras 15 autour des axes 17, en vue de l'écartement et du rapprochement des fourches 19 des bras 15, tandis que le galet 24 coopérant avec la came 24e commande le mouvement de va-et-vient des bras 15 suivant les tiges de guidage 23.

Il apparaît sur les figures 1 à 3 que les tiges de guidage 23 (tout comme les bras 15) sont inclinées sensiblement suivant le même angle que la partie inférieure de la balancelle 5 à laquelle les volailles 4 sont accrochées par les articulations de leurs pattes, les fourches 19 passant en dessous de la balancelle 5. Ainsi, si les bras 15 écartés l'un de l'autre sont déplacés vers l'extérieur et vers le bas à l'aide du galet suiveur de came 24 et sont ensuite rapprochés l'un de l'autre à l'aide du galet suiveur de came 21 (voir 4a), les deux fourches 19 saisissent les deux pattes d'une volaille 4 suspendue à une balancelle 5, en dessous de cette dernière. En imprimant ensuite au bras 15, sans les écarter l'un de l'autre, un mouvement de translation en direction de l'axe du carrousel 1, les fourches 19 entraînent dans leur mouvement les pattes de la volaille 4 et décrochent ainsi cette dernière de la balancelle 5.

Les moyens 11 d'immobilisation en hauteur des pattes comprennent un poussoir 25 monté mobile verticalement en va-et-vient sous l'action d'un galet 26 coopérant avec une came fixe 26a. On reconnaît que le poussoir 25 présente, sur sa face inférieure, vu de côté un profil 27 concave.

Un levier 28 portant à son extrémité libre un galet 29 est monté à son autre extrémité par un axe horizontal 30 sur le support 8, le levier 28 étant sollicité par un ressort 31 de manière que son galet 29 soit appliqué élastiquement contre la face inférieure concave 27 du poussoir 25.

Les moyens de soulèvement 12 comprennent un levier 32 dont une extrémité est articulée par un axe horizontal 33 sur le support 8, à la partie inférieure de ce dernier. Le levier 32 en forme de levier coudé porte à son extrémité libre un élément 34 élastique, par exemple en tôle, muni d'une surface de soutien 35 à profil en V destinée à entrer en contact, avec effet de centrage, avec la face avant du thorax de la volaille 4. Le levier 32 est manoeuvré à l'aide d'un rouleau suiveur de came 36 coopérant avec une came fixe 37 réglable en fonction de la taille des volailles.

Une comparaison des figures 1, 2 et 3 permet de reconnaître que la forme et l'angle de pivotement du levier 32 sont choisis de manière qu'à la fin du mouvement de pivotement vers le haut, la surface de soutien 35 du levier 32 exerce sur la volaille 4 une poussée vers l'axe 2 du carrousel 1, pour appliquer la volaille 4 contre un appui dorsal 38 fixe, réglable en fonction de la taille des volailles.

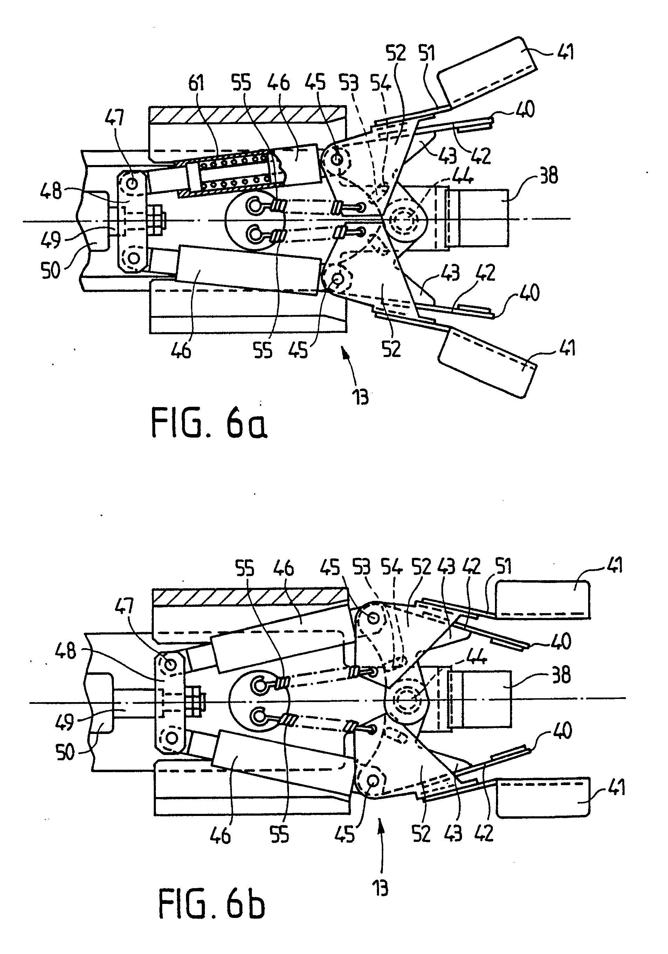

Les moyens de maintien et de contention 13 comprennent, comme le montrent les figures 1, 2 et 3 et surtout les figures 6a et 6b, une pince intérieure de maintien 40 et une pince extérieure de contention 41.

La pince de maintien 40 est formée de deux branches de pinces 42 de faible longueur, solidaire chacune d'une extrémité d'un levier coudé 43 dont l'autre extrémité est articulée sur un axe 44 fixe commun aux deux leviers 43. Entre ses deux extrémités, chaque levier 43 est articulé par un axe 45 sur une extrémité d'une biellette 46 dont l'extrémité opposée est articulée par un axe 47 sur une traverse 48 fixée à l'extrémité d'une tige 49 montée coulissante dans un bloc de guidage 50.

La pince de contention 41 comprend deux branches de pince 51 ayant une surface de préhension plus importante que les branches 42 de la pince de maintien 40. Chaque branche de pince 51 est solidaire d'une extrémité d'un levier 52 articulée, comme le levier 43, par l'axe 45 sur la biellette 46. L'autre extrémité du levier 52 n'est pas articulée sur l'axe 44, mais comporte une boutonnière 53 en arc de cercle, centrée sur l'axe 45, boutonnière dans laquelle est mobile sur un angle de pivotement limité un axe 54 solidaire du levier 43. Enfin, un ressort de traction 55 sollicite chaque levier 52, donc chaque branche de pince 51, autour de l'axe 45 dans le sens de fermeture de la pince 41, c'est-à-dire dans le sens de rapprochement des deux branches 51 l'une de l'autre.

Grâce à cet agencement, le déplacement de la tige 49 de la position selon la figure 6a à la position selon la figure 6b commande directement et positivement la fermeture de la pince de maintien 40 et indirectement, avec un effet d'élasticité dû aux boutonnières 53 et aux ressorts 55, la fermeture de la pince de contention 41.

Comme le montrent les figures 1 à 3, la tige 49 montée coulissante dans le bloc de guidage 50 porte un bloc d'attelage 56 avec lequel coopère une extrémité d'un levier coudé 57 qui est articulée par un axe horizontal 58 sur le support 8 et porte à son autre extrémité un rouleau suiveur de came 59 coopérant avec une came fixe 60.

Il y a lieu de noter que, comme le montre la figure 6a, les biellettes 46 commandant directement la pince de maintien 40 et indirectement la pince de contention 41 ne sont pas des biellettes rigides, mais des biellettes munies d'un ressort de compensation 61 afin de donner également à la pince de maintien 40 une certaine élasticité lors de sa fermeture.

Les moyens 14 de pliage, de centrage et d'introduction comprennent une lame 62 verticale montée coulissante verticalement sur le support 8 et mobile en va-et-vient sous l'action d'un galet 63 coopérant avec une came fixe 64. La lame 62 effilée à son extrémité inférieure, comme le montre le figure 5, porte en saillie sur sa face tournée vers l'axe 2 du carrousel 1 à distance au-dessus de son extrémité inférieure, des pointes 65 formant des butées d'entraînement dont la fonction apparaîtra plus loin.

On va décrire ci-après un cycle complet de conformation des pattes d'une volaille.

La volaille 4 à conformer suspendue par les pattes, au niveau des articulations métatarsiennes, à la balancelle 5, est amenée par avancement du transporteur 3 à un poste de conformation 7 qui est prêt à recevoir une volaille, c'est-à-dire dont les deux bras de préhension et de transfert 15 sont écartés, mais abaissés, le poussoir 25 soulevé, les pinces 40, 41 ouvertes, le bras de soulèvement 32 abaissé et la lame 62 soulevée.

Dès que la volaille 4 se trouve en position devant le poste de conformation 7, les bras 15 sont rapprochés l'un de l'autre sous l'action du galet suiveur de came 21 (figure 1 et 4A), de sorte que les fourches 19 des bras 15 saisissent les pattes en dessous de la balancelle 5.

Les bras 15 sont ensuite relevés à l'aide du galet suiveur de came 24, de sorte que les fourches 19 décrochent les pattes de la balancelle 5 et les transfèrent en dessous du poussoir 25 qui, vers la fin de ce mouvement de transfert, replie les moignons métatarsiens des pattes. A la fin de ce mouvement, la volaille 4 vient en application, par sa partie dorsale, contre l'appui 38, et les moignons métatarsiens sont pliés et bloqués sous le poussoir 25.

La phase suivante est la phase de soulèvement du corps de la volaille 4 à l'aide du bras 32, sous la commande du rouleau suiveur de came 36. A la fin de ce mouvement de soulèvement qui assure la mise à niveau de la volaille par rapport aux pinces 40, 41, les pattes de la volaille 4 sont repliées partiellement de part et d'autre du corps qui est calé entre la surface de soutien 35 du bras 32 et l'appui dorsal 38.

La position haute du bras 32 et la position avant/arrière de l'appui dorsal 38 sont réglées, en fonction de la taille des volailles, de manière que la pointe arrière du sternum de la volaille se trouve alors dans une position prédéterminée (point de référence) par rapport à la lame 62.

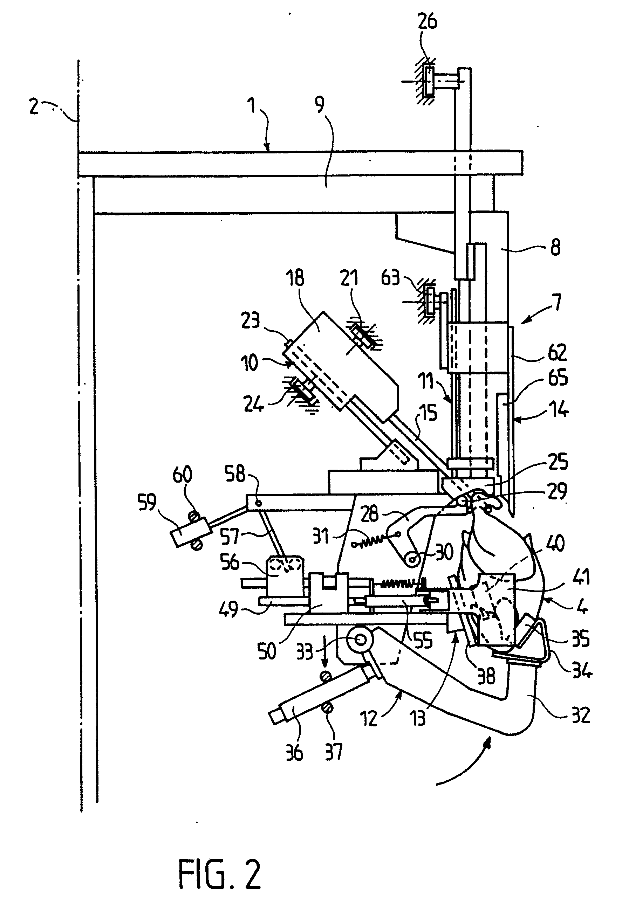

La volaille étant ainsi positionnée, on ferme les pinces 40, 41 sous la commande du rouleau suiveur de came 59, de sorte que la pince 40 saisit le corps du poulet 4 à sa partie dorsale et que la pince 41 saisit le corps de la volaille à l'extérieur des pattes. La volaille est ainsi supportée et maintenue sous une forme ramassée par les deux pinces 40, 41, comme le montre la figure 2.

La phase suivante qui comprend la descente de la lame 62 dans l'ouverture d'éviscération de la volaille, sous l'action du galet suiveur de came 63 assure le centrage du corps de la volaille, puis le pliage, le rapprochement et l'introduction des moignons métatarsiens, dans l'ouverture d'éviscération par les butées 65. En même temps, les deux bras 15 sont écartés pour que les fourches 19 libèrent les pattes de la volaille.

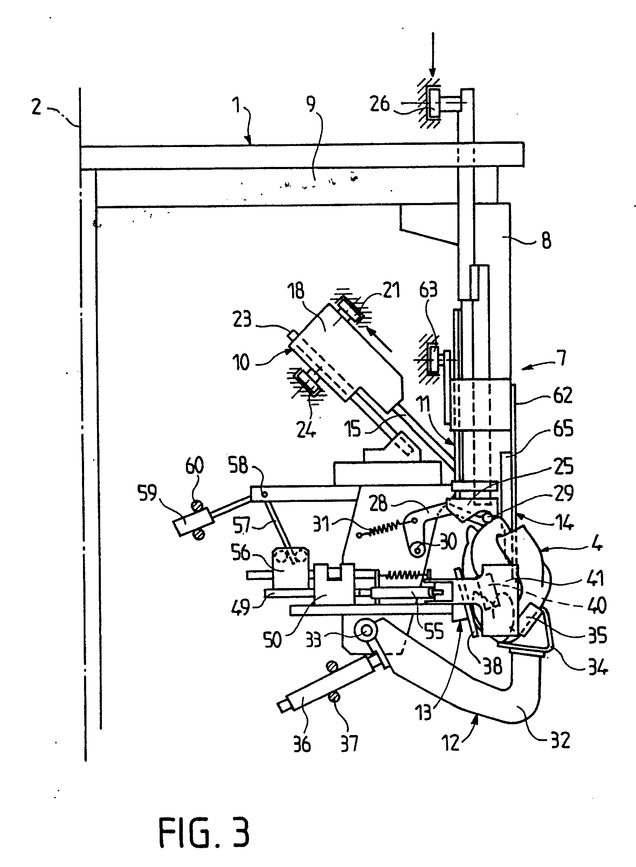

Les pattes étant ainsi libérées par les fourches 19 des bras 15, le poussoir 25 descend sous l'action du galet suiveur de came 26 pour enfoncer les moignons métatarsiens dans la cavité abdominale, ce mouvement d'enfoncement étant renforcé par l'accompagnateur 28 qui se déplace sur les figures 1 à 3 de gauche à droite pendant la descente du poussoir 25, en roulant sur la face inférieure concave de ce dernier (voir figure 3).

A la fin de ce mouvement d'enfoncement des moignons métatarsiens des pattes dans la cavité abdominale, la lame 62 remonte sous l'action du galet 63, le poussoir 25 remonte sous l'action du galet 26 et le bras 32 pivote vers le bas sous l'action du rouleau 36, de sorte que la volaille 4 est maintenue uniquement par les deux pinces 40 et 41, depuis le côté dorsal, alors que le côté ventral, l'avant et l'arrière de la volaille sont complètement dégagés en vue de la pose d'un lien de bridage.

Après la pose de ce lien, les pinces 40 et 41 sont ouvertes sous l'action du rouleau 59, ce qui libère la volaille bridée qui peut être reprise, par exemple, par un transporteur d'évacuation.

Après cette libération de la volaille bridée, il suffit d'abaisser, à l'aide du galet 24, les bras 15 toujours écartés pour que l'unité de conformation soit prête pour un cycle de conformation suivant.

Le dispositif de conformation selon l'invention convient non seulement à la conformation de volailles comportant des moignons métatarsiens, mais également à la conformation de volailles dépourvues de tels moignons, c'est-à-dire ayant leurs pattes sectionnées au niveau des articulations métatarsiennes. Dans ce cas, la conformation consiste uniquement à plier les pattes pour les mettre en position de part et d'autre du corps.

L'adaptation du dispositif de conformation conforme à l'invention à des volailles de tailles différentes est extrêmement simple. En effet, les seuls réglages nécessaires concernent le réglage de la position en hauteur de la surface de soutien 35 du bras 32 et le réglage de la position (avant-arrière) de l'appui dorsal 36 et des pinces 40, 41 de manière que la volaille soit amenée au point de référence, comme indiqué plus en détail ci-avant. Le réglage de l'appui dorsal et de pinces s'effectue simultanément grâce au fait que l'appui dorsal 38 et les pinces 40, 41 sont montés sur une base commune réglable.

L'utilisation d'un carrousel permet de monter plusieurs postes de conformation sur le même carrousel, de sorte que les différents postes peuvent travailler en temps masqué.

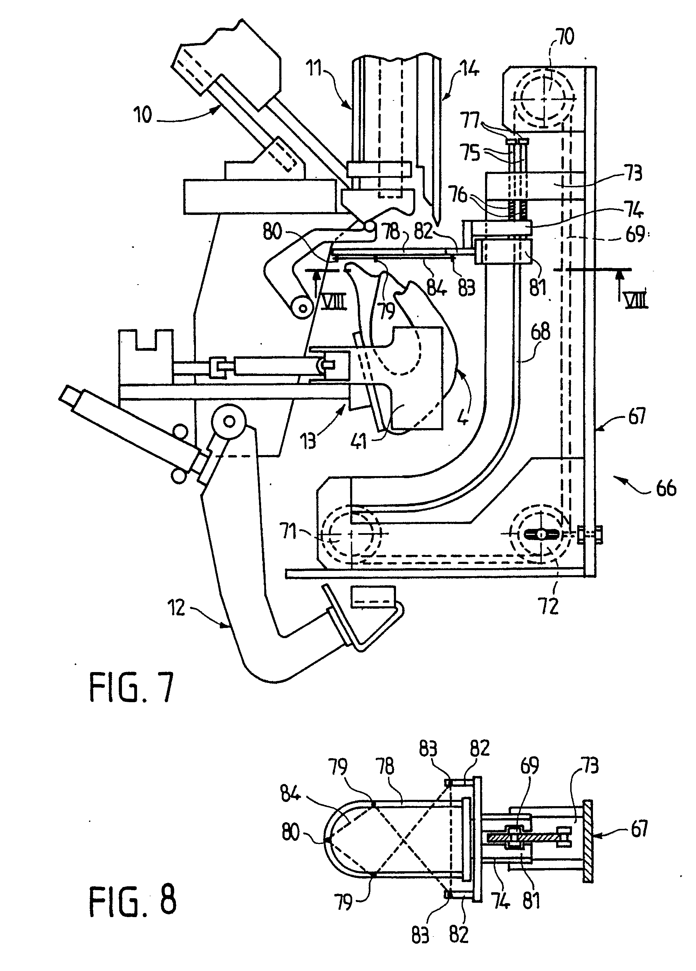

En vue du bridage, selon la figure 7, une volaille 4 conformée, toujours maintenue les moyens 13 de maintien et de contention (seule une pince de contention 41 est visible) est présentée en regard d'une unité de bridage 66, tous les autres éléments de l'unité de conformetion (moyens 10 de préhension et de transfert, moyens 11 d'immobilisation en hauteur des pattes des volailles et de pliage des moignons métatarsiens des pattes, moyens 12 de soulèvement du corps de la volaille, moyens 14 de centrage du corps de la volaille et de guidage des pattes) étant dégagés de la volaille.

L'unité de bridage 66 comprend un bâti 67 ayant une forme générale en L. Le bâti 67 définit une glissière 68 en forme de J pour une chaîne sans fin 69 passant par ailleurs sur trois pignons de renvoi 70, 71 et 72. Le pignon 72 est réglable en vue de la mise sous tension de la chaîne 69.

Le bâti 67 porte un support horizontal 73, au voisinage de son extrémité supérieure, à faible distance en dessous du pignon supérieur 70.

En dessous du support 73 est monté un chariot 74 relié au support 73 par deux tiges verticales 75 de guidage et de butée. Chaque tige 75 est montée mobile en translation verticale dans le support 73, son extrémité inférieure étant solidaire du chariot 74. Un ressort de compression 76 est disposé autour de chaque tige 75 entre le support 73 et le chariot 74. Chaque tige 75 comporte par ailleurs une tête de butée 77 à son extrémité supérieure, au-dessus du support 73.

Le chariot 74 porte, sur le côté tourné vers la volaille 4, un cadre 78 horizontal en forme d'arceau portant sur sa face inférieure trois pions 79, 80 disposés en triangle, comme le montre la figure 8.

L'unité de bridage comprend, par ailleurs, un deuxième chariot 81 disposé en dessous du premier chariot 74 et susceptible d'être animé d'un mouvement de va-et-vient le long de la glissière 68 par la chaîne 69 à laquelle est fixé le chariot 81. Le chariot 81 porte, sur le côté tourné vers la volaille 4, deux doigts 82 espacés, dans un plan horizontal, d'une distance supérieure à la largeur du support 78 du chariot 74, les deux doigts 82 portant chacun un pion 83 sur le côté inférieur.

Tel que cela apparaît sur la figure 7, les pions 79, 80 et 83 des chariots 74 et 81 sont situés dans un même plan horizontal lorsque les deux chariots 74 et 81 se trouvent en position haute. Lesdits pions ont pour fonction de maintenir à l'état tendu un anneau élastique de bridage 84 tendu sur lesdits pions en étant croisé, une boucle de l'anneau 84 étant définie par les trois pions 79, 80 et l'autre boucle par les deux pions 83.

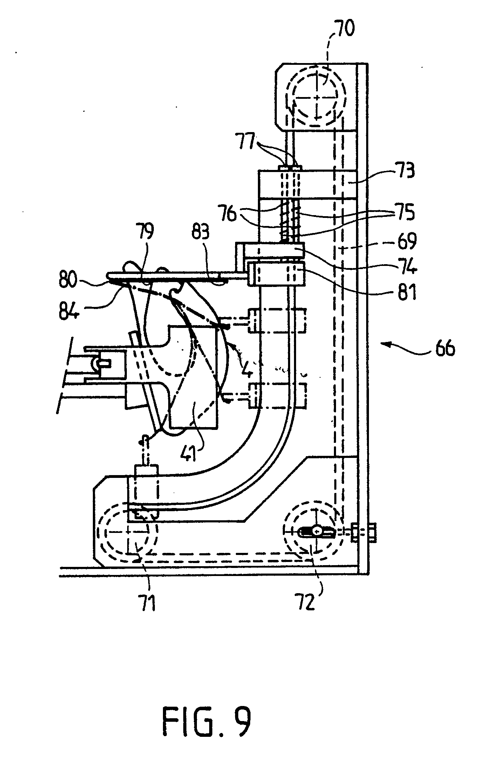

En se référant à la figure 9, on va décrire la manière suivant laquelle l'anneau élastique de bridage 84 est posé par l'unité de bridage 66 sur la volaille 4 maintenue par la pince de contention 41.

Dans un premier temps, la chaîne 69 entraînée dans un sens par un moyen d'entraînement non représenté agissant sur l'un des pignons 70, 71, 72 déplace le chariot 81 de la position suivant la figure 7 vers le bas. Sous l'action des ressorts 76 prenant appui sur le support 73 fixe, l'autre chariot 74 suit le mouvement du chariot 91 jusqu'à ce que les têtes 77 des tiges 75 viennent en butée sur le support 73 et arrêtent le mouvement du chariot 74. A la fin de ce mouvement simultané, les deux supports 74 et 81 occupent la position représentée en trait plein sur la figure 9, l'anneau élastique 84 étant alors engagé par l'une de ses boucles définies par les trois pions 79, 80 sur la partie arrière (croupion et extrémités des pattes) de la volaille 4.

La chaîne 69 continuant d'être entraînée dans le même sens, le chariot 81 poursuit seul son mouvement de descente pour faire passer la seconde boucle de l'anneau 84, tout en tendant ce dernier dans son ensemble, progressivement devant la partie ventrale de la volaille 4 jusqu'à la partie avant de cette dernière en passant sur les ailes bloquées sur la partie dorsale. Pendant ce mouvement de descente du chariot 81 par rapport au chariot 74, le lien 84 se dégage d'abord des pions 79 (position en trait mixte), puis du pion 80 pour s'accrocher au croupion de la volaille 4 et ne reste plus accroché qu'aux pions 83 qui en assurent la mise sous tension et la pose autour de la partie ventrale et de la partie avant de la volaille (positions en tirets).

A la fin de ce mouvement de tension et de pose de l'anneau élastique 84 autour de la volaille 4 par le déplacement du chariot 81 sous l'action de la chaîne 69, les pions 83 sont commandés par un dispositif d'escamotage non représenté de manière à libérer l'anneau 84 dont la seconde boucle s'accroche alors à la Partie avant de la volaille, ce qui fait que la volaille 4 se trouve parfaitement bridée par l'anneau élastique 84 posé à l'état croisé et tendu sur la volaille.

La volaille conformée et bridée est représentée sur les figures loa et lob qui montrent que le bracelet croisé forme une première boucle partant de la base du dos en enserrant les extrémités des pattes, et une seconde boucle passant par les flancs, venant se loger dans l'intervalle entre les cuisses et les flancs, et enserrant les ailes et le thorax.

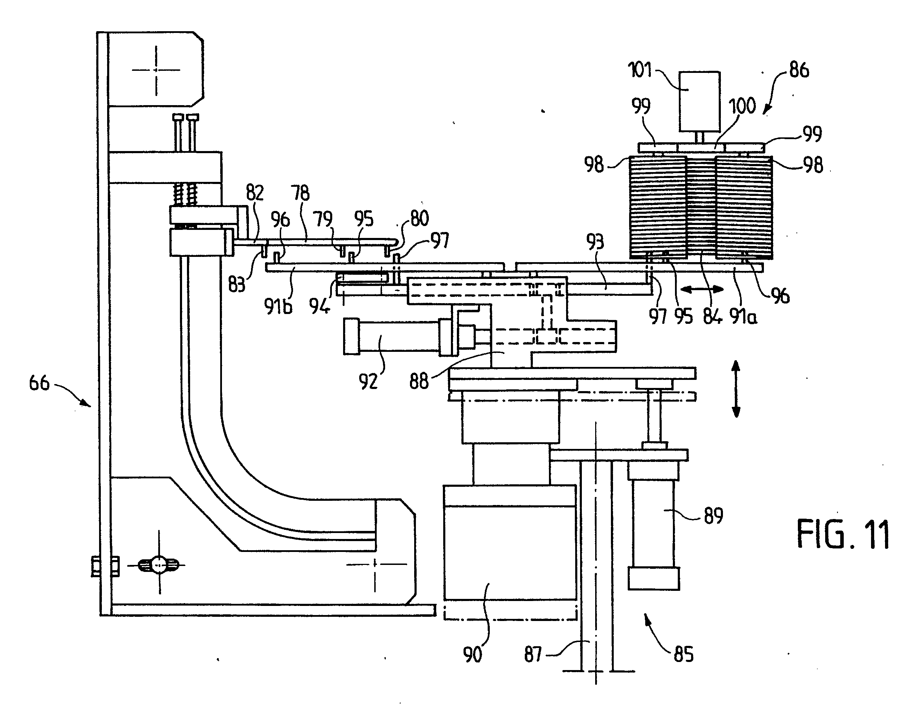

Les figures 11, 12 et 13 représentent un dispositif pour l'alimentation automatique de l'unité de bridage 66 en anneaux élastiques croisés.

Selon la figure 11, ce dispositif d'alimentation comprend une unité de transfert 85 amenant les anneaux élastiques croisés un à un d'une unité d'approvisionnement 86 à l'unité de bridage 66.

L'unité de transfert 85 comprend, sur un bâti fixe 87, une tête 88 déplaçable en va-et-vient en hauteur sous l'action d'un vérin 89 et pouvant être animée d'un mouvement de pivotement de 180° en va-et-vient sous l'action d'un moteur 90. La tête 88 porte deux paires opposées de bras gla, 91b susceptibles d'être commandées en opposition par un vérin commun 92 de manière que les bras gla d'une paire soient rapprochés pendant que les bras 91b de l'autre paire sont écartés, et inversement.

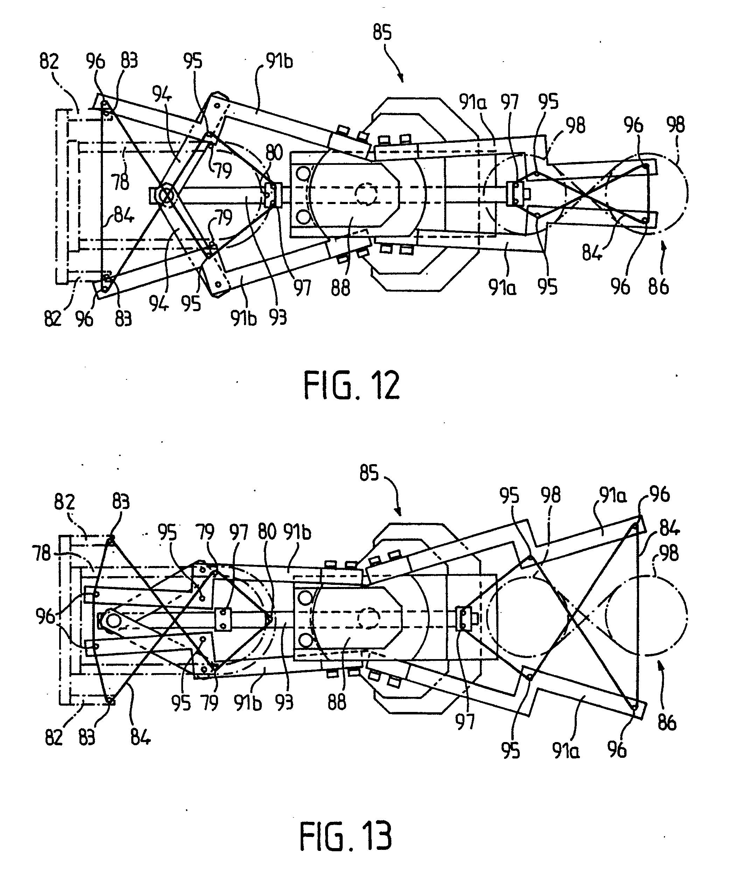

Le vérin 92 commande le mouvement des bras gla, 91b, par l'intermédiaire d'un système à pignon et crémaillère, par une tige coulissante 93 attaquant les bras 91 d'une paire par deux biellettes 94 (voir figures 12 et 13).

Chaque bras 91 porte sur le côté supérieur deux pions 95, 96 et la tige 93 porte sur le côté supérieur, en position symétrique par rapport à la tête 88, deux paires de pions 97, de telle manière que lesdits pions 97 se trouvent avancés entre les bras 91 d'une paire lors du rapprochement des bras de cette paire, et retirés entre les bras 91 de l'autre paire lors de l'écartement des bras de cette paire, et inversement. Par conséquent, tel que cela apparaît surtout sur les figures 12 et 13, les pions 95, 96, 97 situés d'un côté de la tête 88 se trouvent mutuellement rapprochés et les pions situés de l'autre côté de la tête 88 se trouvent mutuellement écartés, et inversement, lors du mouvement d'ouverture et de fermeture des bras 91.

L'unité d'approvisionnement 96 installée en position fixe d'un côté de la tête 88 de l'unité de transfert 85 comprend deux éléments creux cylindriques 98 espacés, parallèles, montés en position verticale de manière que dans chacune des deux positions de la tête 88 de l'unité de transfert 85, les deux bras 91 d'une paire de bras se trouvent en dessous de l'extrémité inférieure des deux éléments 98. Les deux éléments 98 comportent à leur extrémité supérieure des pignons 99 couplés par le pignon 100 d'un moteur d'entraînement 101, de préférence un moteur pas à pas, de manière que les deux éléments 98 tournent en sens contraire lors de leur entraînement par le moteur 101. Les deux éléments 98 présentent des filets contraires, de préférence des filets à pas progressif vers le bas.

Les deux éléments 98 de l'unité d'approvisionnement 96 sont destinés à recevoir une réserve d'anneaux élastiques croisés 84 enfilés les uns au-dessus des autres sur les deux éléments 98 de telle manière que les anneaux 84 puissent être descendus pas à pas sur les éléments 98, lors de la rotation de ces derniers, et être distribués un à un à l'extrémité inférieure de l'unité d'approvisionnement 86.

En se référant aux figures 11, 12 et 13 on va décrire le mode d'alimentation de l'unité de bridage 66 en anneaux élastiques croisés à partir de l'unité d'approvisionnement 86.

La tête 88 de l'unité de transfert 85 étant abaissée par le vérin 89 et étant amenée par le moteur 90 dans l'une de ses deux positions de pivotement dans laquelle la paire de bras gla se trouve en dessous de l'unité d'approvisionnement 86, on rapproche les bras 91e de ladite paire à l'aide du vérin 92 (voir figure 12). A l'aide du vérin 89, on soulève ensuite la tête 88, de manière que les pions 95 et 96 des bras 91 et les pions 97 sur le côté correspondant de la tige 93 pénètrent dans l'extrémité inférieure des éléments 98. On fait ensuite tourner d'un pas les éléments 98, de sorte que le dernier anneau élastique 84 disposé sur les éléments 98 se trouve libéré par les éléments 98 à l'extrémité inférieure de ces derniers, et repris sur les pions 95, 96 des bras 91a et les pions 97 de la tige 93. Cette reprise d'un anneau élastique croisé par les pions des bras gla est représentée sur la moitié de droite de la figure 12.

On écarte ensuite les deux bras 91a à l'aide du vérin 92, et on retire simultanément la tige 93 vers la gauche, ce qui provoque une "ouverture" de l'anneau 84 et une mise sous tension de cet anneau, de la manière visible sur la moitié de droite de la figure 13. Il est à noter que les éléments 98 comportent, à leur extrémité inférieure, des encoches non représentées permettant le passage des pions 95, 96 et 97 lors de l'écartement des bras 91.

On abaisse ensuite la tête 88 à l'aide du vérin 89, et on fait pivoter la tête 88 de 183˚ à l'aide du moteur 90, de manière à amener les bras gla avec l'anneau 84 porté par ces bras au poste de bridage 66, en dessous des pions 79, 80 et 83, dans la position visible sur la moitié de gauche de la figure 11 pour les bras 91b. On reconnaît que dans cette position, les pions 95, 96 et 97 de l'unité de transfert 85 portant l'anneau élastique 84 sont disposés à l'extérieur des pions 79, 80, 83 de l'unité de bridage 66.

On soulève ensuite la tête 88 à l'aide du vérin 89, ce qui amène l'anneau croisé 84 à la hauteur des pions 79, 80, 83.

Par actionnement du vérin 92, on rapproche alors les deux bras 91a, de sorte que l'anneau élastique croisé 84 porté par ces bras se trouve repris par les pions 79, 80, 83 de l'unité de bridage 66, de la manière visible sur la moitié de gauche de la figure 13.

Après avoir abaissé de nouveau la tête 98 à l'aide du vérin 89, et fait pivoter la tête 88 de 180˚ à l'aide du moteur 90, les bras gla se retrouvent en dessous de l'unité d'approvisionnement 86 et le cycle décrit de reprise d'un anneau élastique à l'unité d'approvisionnement 86 et de transfert de cet anneau à l'unité de bridage 66 recommence.

Il y a lieu de noter qu'en raison de la présence de deux paires opposées de bras 91a, 91b sur la tête 88 de l'unité de transfert 85, les deux paires de bras étant commandées simultanément en opposition par le vérin 92, un cycle de reprise d'un anneau élastique 84 par une paire de bras à l'unité d'approvisionnement 86 se déroule simultanément avec le transfert d'un anneau élastique par l'autre paire de bras à l'unité de bridage 66. C'est la raison pour laquelle le mouvement d'écartement des bras se trouvant en position de reprise en dessous de l'unité d'approvisionnement 86 doit avoir lieu pendant que la tête 88 se trouve encore en position haute. En effet, le rapprochement des bras de l'autre paire, à l'unité de bridage 66, doit se faire pendant que la tête 88 se trouve en position haute, afin que l'anneau élastique porté par cette autre paire de bras puisse être transféré aux pions 79, 80, 83 de l'unité de bridage.

Comme déjà mentionné, plusieurs unités de conformation sont avantageusement montées sur un carrousel. Dans ce cas, il est nécessaire d'utiliser également plusieurs unités de bridage 66 qui sont alors avantageusement montées sur un transporteur, d'une part pour pouvoir suivre les unités de conformation pendant une durée suffisante pour assurer le bridage et d'autre part pour pouvoir être alimentées en anneaux élastiques de bridage.

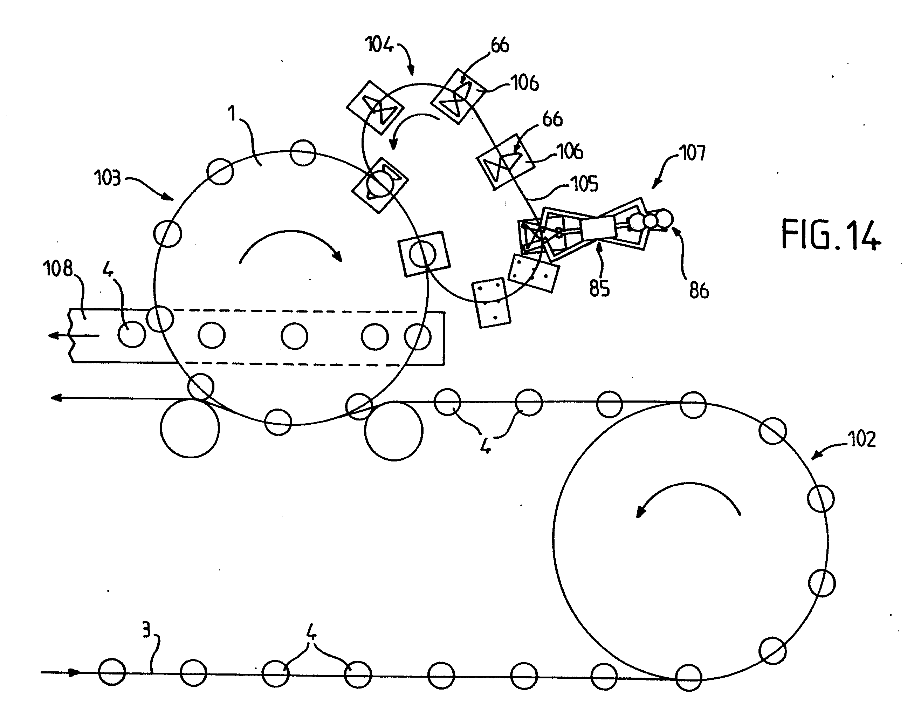

La figure 14 représente un schéma d'implantation d'une installation complète de conformation des ailes, de conformation des pattes et de bridage de volailles, cette installation étant incorporée à un transporteur aérien auquel les volailles 4 sont suspendues par les pattes à des balancelles, de la manière illustrée par la figure 1.

Le transporteur 3 passe d'abord à un dispositif 102 de conformation des ailes constitué par un carrousel portant un certain nombre de postes de conformation des ailes. Un tel dispositif est décrit plus en détail dans la demande de brevet français n˚ 88 09 175 déposée le 6 Juillet 1988.

Après conformation des ailes des volailles 4, le transporteur 3 amène les volailles 4 à un dispositif 103 de conformation des pattes. Le dispositif 103 comprend, comme représenté sur les figures 1 à 3, un carrousel 1 sur lequel sont montés un certain nombre de postes de conformation 7 répartis uniformément sur le pourtour du carrousel 1.

Au dispositif de conformation 103 est associé un dispositif de bridage 104 comprenant un transporteur 105 formé d'un certain nombre de chariots 106 portant chacun une unité de bridage 66. On reconnaît le transporteur 105 sur lequel les chariots 106 circulent en circuit fermé décrit un trajet non circulaire de manière à s'adapter sur une certaine longueur au trajet suivi par les unités de conformation montées sur le carrousel 1, afin de maintenir chaque unité de bridage 66 en position par rapport à une unité de conformation pendant le temps nécessaire pour la pose, par l'unité de bridage 66, d'un lien de bridage sur la volaille maintenue à l'unité de conformation.

En vue de l'alimentation en lien de bridage du dispositif de bridage 104, un dispositif d'approvisionnement et de transfert 107 comprenant une unité d'approvisionnement 86 et une unité de transfert 85 est associé au dispositif de bridage 104.

L'unité de transfert 85 étant installée à poste fixe, il est prévu d'utiliser pour le dispositif de bridage 104 un transporteur 105 du type à accumulation, comprenant des chariots 106 débrayables afin de pouvoir arrêter chaque chariot 106 en regard de l'unité de transfert 85 pendant le temps nécessaire pour permettre le transfert d'un lien de bridage de l'unité de transfert 85 à l'unité de bridage 66 portée par le chariot 106.

On reconnaît qu'à la suite de leur bridage, les volailles 4 sont libérées par les unités de conformation, avant d'avoir effectué un tour complet sur le carrousel 1, et sont reprises par un tapis d'évacuation 108.

Il va de soi que le mode de réalisation représenté et décrit n'a été donné qu'à titre d'exemple illustratif et non limitatif et que de nombreuses modifications et variantes sont possibles dans le cadre de l'invention.

Ainsi, lorsque le pas des balancelles portant les volailles 4 sur le transporteur 3 est faible, il peut être nécessaire de prévoir plusieurs dispositifs de conformation et de bridage successifs pour traiter toutes les volailles 4 suspendues au transporteur, chaque dispositif ne traitent par exemple qu'une volaille sur deux ou une volaille sur quatre. En effet, le pas des unités de conformation sur le carrousel 1 ne peut pas être inférieur à une valeur minimale, compte tenu de l'encombrement des éléments constitutifs de chaque unité de conformation.

Le dispositif de bridage conforme à l'invention est adaptable sans difficultés à des bracelets élastiques de tailles différentes utilisés pour des volailles de tailles différentes.

Par ailleurs, il y a lieu de noter que l'installation de conformation et de bridage permet de traiter des volailles à chaud, directement après abattage et éviscération, à tiède ou à froid (après ressuage).

## Revendications

1. Procédé pour la conformation des pattes et le bridage de volailles, notamment de poulets, après abattage, plumage et éviscération et après conformation des ailes, consistant à plier les pattes contre le corps et à les fixer en position à l'aide d'un lien, par exemple un bracelet élastique, caractérisé par le fait qu'on transfère chaque volaille, en la saisissant par les articulations métatarsiennes, d'une balancelle par laquelle elle est suspendue à un transporteur sur un dispositif de conformation, on immobilise les extrémités des pattes de la volaille, on soulève le corps de la volaille entre les pattes en pliant ces dernières pour amener le corps à un point de référence, on bloque la volaille dans cette position par une pince de maintien saisissant le corps de la volaille à sa partie dorsale et par une pince de contention enserrant la volaille à l'extérieur des pattes pour maintenir les pattes en position repliée contre le corps tout en laissant dégagées la partie ventrale, la partie avant et la partie arrière de la volaille, on libère les articulations métatarsiennes et on pose sur la volaille un lien de bridage constitué par une boucle double, la première boucle partant de la base du dos de la volaille en enserrant les extrémités des pattes, et la seconde boucle passant par les flancs, en venant se loger dans l'intervalle entre les cuisses et les flancs, et enserrant les ailes et le thorax, avant d'ouvrir les deux pinces pour libérer la volaille entièrement conformée et bridée.

2. Procédé suivant la revendication 1, pour la conformation de volailles dont les pattes sont munies d'un moignon métatarsien, caractérisé par le fait qu'on plie et introduit les moignons métatarsiens dans l'ouverture d'éviscération après avoir bloqué la volaille par les pinces.

3. Procédé suivant la revendication 1 ou 2, pour le bridage à l'aide d'un lien constitué par un bracelet ou anneau élastique croisé, caractérisé par le fait qu'on présente l'anneau élastique croisé sensiblement dans un plan horizontal en face de la partie arrière de la volaille conformée maintenue par les pinces, qu'on engage l'une des boucles de l'anneau croisé sur le croupion et les extrémités des pattes de la volaille, et qu'on tire l'autre boucle de l'anneau croisé sur le côté ventral jusqu'au côté avant de la volaille, en passant sur les ailes, et on la libère.

4. Installation pour la mise en oeuvre du procédé suivant la revendication 1, caractérisée par le fait qu'elle comprend au moins un poste de conformation (7) pouvant être desservi par un transporteur (3) auquel les volailles (4) à conformer sont suspendues par des balancelles (5), ledit poste comprenant :

- des moyens de préhension et de transfert (10) pour saisir les extrémités des pattes de chaque volaille, les décrocher de la balancelle (5) et les amener au poste de conformation;

- des moyens (11) pour immobiliser en hauteur les extrémités des pattes de la volaille après transfert au poste de conformation;

- des moyens (12) pour soulever le corps de la volaille de manière à l'amener à un point de référence, en pliant les pattes;

- une pince de maintien (40) pour saisir le corps de la volaille à sa partie dorsale et le bloquer en position;

- une pince de contention (41) pour enserrer la volaille à l'extérieur des pattes et maintenir les pattes en position repliée contre le corps, et

- des moyens d'actionnement (11, 24, 36, 59) pour manoeuvrer les moyens de préhension et de transfert, les moyens d'immobilisation, les moyens de soulèvement et les pinces.

5. Installation suivant la revendication 4 pour la mise en oeuvre du procédé suivant la revendication 2, caractérisée par le fait que le poste de conformation comprend, en outre, des moyens (11) de pliage et d'introduction des moignons métatarsiens des pattes dans l'ouverture d'éviscération du corps de la volaille, ainsi que des moyens d'actionnement (63) pour manoeuvrer lesdits moyens de pliage et d'introduction.

6. Installation suivant la revendication 5, caractérisée par le fait que chaque poste de conformation comprend, en outre, des moyens de centrage et de guidage (14) pour centrer la partie haute (partie arrière) du corps de la volaille, pour dégager l'ouverture d'éviscération de cette dernière et pour enfoncer les moignons métatarsiens dans ladite ouverture, et des moyens d'actionnement (26) pour manoeuvrer lesdits moyens de centrage et de guidage.

7. Installation suivant l'une quelconque des revendications 4 à 6, caractérisée par le fait que les moyens de préhension et de transfert (10) comprennent deux bras opposés (15) montés sur un support commun (18) et portant chacun à leur extrémité libre une fourche (19) à deux doigts tournée vers la fourche du bras opposé, les deux bras étant mobiles en opposition en va-et-vient dans le sens d'un rapprochement et d'un écartement réciproques de leurs fourches et étant mobile conjointement en va-et-vient entre une position de préhension des pattes d'une volaille accrochée à une balancelle et une position de libération desdites pattes, ainsi que des moyens d'actionnement (21, 24) pour commander lesdits mouvements de manière à fermer les bras en position de préhension pour saisir les pattes d'une volaille, à amener les bras fermés de la position de préhension à la position de libération, à écarter les bras dans cette position pour libérer les pattes et à ramener ensuite les bras écartés en position de préhension pour les fermer ici en vue de saisir les pattes d'une volaille suivante.

8. Installation suivant l'une quelconque des revendications 4 à 7, caractérisée par le fait que les moyens d'immobilisation en hauteur des extrémités des pattes comprennent un poussoir (25) mobile verticalement en va-et-vient.

9. Installation suivant l'une quelconque des revendications 4 à 8, caractérisée par le fait que les moyens de soulèvement du corps de la volaille comprennent un levier (32) conçu, et mobile de bas en haut, de manière à agir sur le poitrail de la volaille avec effet de centrage et appliquer le corps de la volaille, au moins à la fin du mouvement de soulèvement, contre un appui dorsal (38).

10. Installation suivant l'une quelconque des revendications 4 à 9, caractérisée par le fait que la pince de maintien (40) et la pince de contention (41) comprennent deux branches de pince de maintien (42) articulées sur un support commun et commandées directement dans leur mouvement d'ouverture et de fermeture, et deux branches de pince de contention (51) montées avec du jeu angulaire sur les branches de pince de maintien et sollicitées par des ressorts (55) dans le sens de fermeture.

11. Installation suivant l'une quelconque des revendications 5 à 10, caractérisée par le fait que les moyens de pliage et d'introduction des moignons métatarsiens comprennent ledit poussoir (25) et un organe d'accompagnement (28) dudit poussoir pour dégager les extrémités des pattes du poussoir en enfonçant les moignons métartasiens dans l'ouverture d'éviscération lors de la descente du poussoir.

12. Installation suivant l'une quelconque des revendications 6 à 11, caractérisée par le fait que les moyens de centrage et de guidage comprennent une lame (62) sensiblement verticale ef filée à son extrémité inférieure et mobile sensiblement verticalement en va-et-vient entre une position haute dans laquelle sa pointe est située au-dessus du corps de la volaille et une position basse dans laquelle sa pointe est engagée dans la cavité du corps de la volaille, cette lame portant, en saillie sur sa face tournée vers le pattes, des butées (65) pour rapprocher les moignons métatarsiens et les entraîner dans ladite cavité.

13. Installation suivant l'une quelconque des revendications 4 à 12, caractérisée par le fait que plusieurs postes de conformation sont montés sur un carrousel (1, 2) et que lesdits moyens d'actionnement sont commandés par des cames fixes.

14. Installation pour la mise en oeuvre du procédé suivant la revendication 3, caractérisée par le fait qu'elle comprend qu'au moins une unité de bridage (66) comprenant des moyens de maintien (79, 80, 83) pour présenter un anneau élastique croisé (84) à l'état légèrement tendu dans un plan, et des moyens de déplacement des moyens de maintien par rapport à une volaille conformée (4) de manière à poser et tendre le lien sur la volaille.

15. Installation suivant la revendication 14, caractérisée par le fait que les moyens de maintien de l'anneau élastique comprennent deux groupes de pions (79, 80, 83) maintenant les deux boucles de l'anneau croisé et que les moyens de déplacement desdits pions comprennent deux moyens de déplacement faisant effectuer des mouvements différents auxdits deux groupes de pions.

16. Installation suivant la revendication 15, caractérisée par le fait que lesdits moyens de déplacement sont conçus de manière à imprimer au premier et au second groupes de pions un déplacement conjoint de faible amplitude pour poser sur la partie arrière de la volaille la boucle de l'anneau maintenue par les pions (79, 80) du premier groupe et imprimer ensuite uniquement au second groupe de pions (83) avec libération simultanée de l'anneau par les pions du premier groupe, un second déplacement de grande amplitude pour tendre l'anneau sur la partie ventrale de la volaille et poser la seconde boucle à l'état tendu sur la partie avant de la volaille.

17. Installation suivant la revendication 16, caractérisée par le fait que les pions (79, 80) du premier groupe de pions sont montés sur un premier chariot (74) et les pions (83) du second groupe de pions sont montés sur un second chariot (81) guidé par une glissière (68), le second chariot étant entraîné par un moyen d'entraînement (69) le long de ladite glissière et le premier chariot comportant des moyens (75) pour son déplacement sur la première partie du trajet de déplacement du second chariot sous l'action du déplacement de ce dernier.

18. Installation suivant l'une quelconque des revendications 14 à 17, caractérisée par le fait qu'elle comprend, en outre, des moyens (85) de transfert d'un anneau croisé (84) auxdits pions de maintien à partir de moyens (86) d'approvisionnement en anneaux élastiques croisés.

19. Installation suivant la revendication 18, caractérisée par le fait que lesdits moyens de transfert comprennent une paire de bras (91) portant des pions (95, 96) et des moyens (92) pour écarter et rapprocher lesdits bras, et des moyens (90) pour déplacer la paire de bras entre les moyens d'approvisionnement et les pions de maintien de l'unité de bridage.

20. Installation suivant la revendication 19, caractérisée par le fait que les moyens de transfert comprennent deux paires de bras (91a, 91b) portant des pions, les bras des deux paires étant commandés de manière que les bras d'une paire s'écartent lorsque les bras de l'autre paire se rapprochent, et inversement.

21. Installation suivant la revendication 19 ou 20, caractérisée par le fait que les moyens de transfert comprennent en outre, des moyens (93) mobiles en va-et-vient suivant la longueur de l'anneau croisé, simultanément avec l'écartement et le rapprochement desdits bras, ces moyens portant des pions (97) pour augmenter la longueur d'une boucle de l'anneau lors de l'écartement des bras.

22. Installation suivant la revendication 20 ou 21, caractérisée par le fait et que lesdits moyens de transfert (85) sont montés pivotants de 180° de manière à présenter en alternance simultanément une première paire de bras en regard des moyens d'approvisionnement et les écarter pour reprendre un lien croisé desdits moyens d'approvisionnement fixes, et une seconde paire de bras portant un anneau élastique croisé en regard des pions de maintien de l'unité de bridage et les rapprocher pour transférer l'anneau croisé auxdits pions de maintien.

23. Installation suivant l'une quelconque des revendications 18 à 22, caractérisée par le fait que les moyens d'approvisionnement comprennent deux éléments de support (98) cylindriques, parallèles et espacés, comportant un filetage extérieur, et des moyens d'entraînement simultané en rotation pas à pas desdits deux éléments de support.

24. Installation suivant la revendication 23, caractérisée par le fait que chacun desdits éléments de support présente un filet à pas progressif.

25. Installation suivant l'une quelconque des revendications 18 à 24, caractérisée par le fait qu'elle comprend plusieurs unités de bridage (66) montées sur un transporteur (105) conçu pour les déplacer entre un unique moyen de transfert (85) et plusieurs unités de conformation (7) mobiles.

FIG. 1

14

FIG. 2

FIG. 3

FIG. 5

FIG. 4a

FIG. 4b

FIG. 6a

FIG. 6b

FIG. 7

FIG. 8

FIG. 9

FIG. 10 a

FIG. 10 b

FIG. 11

FIG. 12

FIG. 13

FIG.14

EP 0 413 629 A1

Office européen
des brevets

**RAPPORT DE RECHERCHE
EUROPEENNE**

Numéro de la demande

**EP 90 40 2287**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | FR-A-2 522 475  (SPECIAL MANUTENTION) <br> * le document en entier * <br> − − − | 1-6 | A 22 C 21/00 |
| A | US-A-4 339 847  (NICCOLS) <br> − − − | | |
| A | US-A-3 509 594  (KLIEWER) <br> − − − | | |
| A | US-A-2 842 443  (RICE) <br> − − − | | |
| A | FR-A-1 310 089  (GORDON JOHNSON COMPANY) <br> − − − − − | | |

**DOMAINES TECHNIQUES
RECHERCHES (Int. Cl.5)**

A 22 C
B 65 B

Le présent rapport de recherche a été établi pour toutes les revendications

| Lieu de la recherche | Date d'achèvement de la recherche | Examinateur |
|---|---|---|
| La Haye | 03 décembre 90 | DE LAMEILLIEURE D. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire
T : théorie ou principe à la base de l'invention

E : document de brevet antérieur, mais publié à la
   date de dépôt ou après cette date
D : cité dans la demande
L : cité pour d'autres raisons

& : membre de la même famille, document
   correspondant